# EUROPEAN PATENT APPLICATION

(11) **EP 4 502 993 A1**
(43) Date of publication of application: **05.02.2025**
(21) Application number: 23794992.0
(22) Date of filing: 08.04.2023
(51) Int. Cl.: G09F 9/30

(54) **OPTICAL DISPLAY, SEAT, AND VEHICLE**

(30) Priority: 29.04.2022 CN 202210469112
(71) Applicant: Shenzhen Yinwang Intelligent Technologies Co., Ltd., Shenzhen, Guangdong 518129 (CN)
(72) Inventor: WU, Yu, Shenzhen, Guangdong 518129 (CN); LIU, Yuanke, Shenzhen, Guangdong 518129 (CN); JIA, Lirui, Shenzhen, Guangdong 518129 (CN)
(74) Representative: Pfenning, Meinig & Partner mbB
(86) International application number: PCT/CN2023/087165
(87) International publication number: WO 2023/207559

(57) **Abstract**

An optical display (10), a seat, and a transport means are provided. The optical display (10) includes a housing (1), a light source unit (3), and a curved mirror (7). The light source unit (3) is fastened to the housing (1) and is configured to emit imaging light. The curved mirror (7) includes a mirror body (72) and a connection part (74) protruding from the mirror body (72). The mirror body (72) is configured to reflect the imaging light to the outside of the housing (1), and the connection part (74) presses against and is fixedly connected to the first positioning surface (162). The curved mirror (7) is directly fastened to the first positioning surface (162) on the housing (1) by using the connection part (74) without using an adapter like a frame body. This reduces a quantity of elements of the optical display (10), improves assembly accuracy of the optical display (10), and simplifies a structure of the optical display (10), thereby helping improve accuracy of an optical path system of the optical display (10) and improve output quality of imaging light of the optical display (10).

## Description

This application claims priority to Chinese Patent Application No. 202210469112.6, filed with the China National Intellectual Property Administration on April 29, 2022 and entitled "OPTICAL DISPLAY, SEAT, AND TRANSPORT MEANS", which is incorporated herein by reference in its entirety.

### TECHNICAL FIELD

This application relates to the field of optical display technologies, and in particular, to an optical display, a seat, and a transport means.

### BACKGROUND

An optical display is a device for obtaining a large-screen visual experience in small space by using an optical imaging principle, and may be widely used for a projector, a head-up display (head-up display, HUD), an in-vehicle display, a vehicle light, and the like. A curved mirror in the optical display is configured to project imaging light emitted by a light source unit to the outside of the optical display.

In a commonly used optical display, a curved mirror is first pasted on a frame body, and then fastened to a housing by using the frame body. In this case, the optical display has a complex structure that requires more assembly steps.

### SUMMARY

Embodiments of this application provide an optical display, a seat, and a transport means that can simplify a structure.

According to a first aspect, this application provides an optical display, including a housing, a light source unit, and a curved mirror. The housing is provided with a first positioning surface. The light source unit is fastened to the housing and is configured to emit imaging light. The curved mirror includes a mirror body and a connection part protruding from the mirror body. The mirror body is configured to reflect the imaging light to the outside of the housing, and the connection part is fixedly connected to the first positioning surface.

A conventional manner of fastening a curved mirror of an optical display is as follows: The curved mirror is first fastened to a frame body, and then the frame body is fastened to a housing by using a fastening member. In this case, the optical display has a complex structure that requires more assembly steps and more space for occupation. This is not conducive to development toward a high screen-to-body ratio. There is an assembly tolerance between elements. If a quantity of elements of the optical display is larger, assembly accuracy may be lower. The assembly accuracy affects accuracy of an optical path system of the optical display.

In this application, the curved mirror is directly fastened to the first positioning surface of the housing by using the connection part without using an adapter like a frame body. This reduces a quantity of elements of the optical display, simplifies a structure of the optical display, reduces occupied space of the optical display, and reduces assembly steps of the optical display, thereby improving assembly accuracy of the optical display, improving accuracy of an optical path system of the optical display, and improving output quality of imaging light of the optical display.

The first positioning surface may position the curved mirror in a normal direction of the first positioning surface, to facilitate assembly between the housing and the curved mirror.

The connection part may also be referred to as a "mounting ear". The connection part and the first positioning surface may be attached to each other, or press against each other, or be in contact with each other. The connection part and the first positioning surface may be fastened by adhesive bonding, a fastener, or the like.

According to the first aspect, in a possible implementation, the connection part is provided with a groove. The housing further includes a positioning post protruding from the first positioning surface, and the positioning post penetrates through the groove.

In a process of assembling the curved mirror and the housing, the positioning post may position the connection part, thereby facilitating assembly between the curved mirror and the housing, and improving assembly accuracy and assembly efficiency of the optical display.

According to the first aspect, in a possible implementation, a reserved gap exists between an inner wall of the groove and the positioning post.

Due to a difference in manufacturing materials, a thermal expansion coefficient of the curved mirror and a thermal expansion coefficient of another fitting component of the optical display are usually different. Therefore, when an ambient temperature changes greatly, the curved mirror is easily deformed due to squeezing of the another fitting component. For example, an optical display is used for a transport means. When an internal temperature (namely, an ambient temperature at which the optical display is located) of the transport means is greater than a preset temperature (for example, 70 degrees Celsius), the curved mirror and the housing are deformed due to thermal expansion, and the housing may squeeze the curved mirror. Once the curved mirror is deformed, an optical path of imaging light reflected by a deformed part is distorted, and consequently, output quality of the imaging light of the optical display is affected.

In this application, due to a thermal expansion factor of a material caused by an ambient temperature change, a reserved gap exists between an inner wall of the groove and the positioning post, to reserve space for thermal expansion of the curved mirror and the housing. This reduces a possibility that the curved mirror is deformed due to squeezing, and improves optical path stability of the optical display.

According to the first aspect, in a possible implementation, the housing further includes a positioning part disposed on the housing. The first positioning surface is disposed on an inner wall of the positioning part, and the connection part is accommodated in the positioning part.

The connection part is accommodated in the positioning part, so that rotation of the curved mirror relative to the housing can be limited when the positioning part positions the connection part. This improves position stability of the curved mirror relative to the housing, and further improves display quality of the optical display.

According to the first aspect, in a possible implementation, the inner wall of the positioning part further includes a side surface connected to the first positioning surface, and a reserved gap exists between the side surface and an edge of the connection part.

In this application, due to a thermal expansion factor of a material caused by an ambient temperature change, a reserved gap exists between the side surface and an edge of the connection part, to reserve space for thermal expansion of the curved mirror and the housing. This reduces a possibility that the curved mirror is deformed due to squeezing, and improves optical path stability of the optical display.

According to the first aspect, in a possible implementation, there are a plurality of connection parts, the mirror body includes a first edge, a second edge, a third edge, and a fourth edge, the first edge and the second edge are arranged oppositely in a first direction, the third edge and the fourth edge are arranged oppositely in a second direction, the first direction is different from the second direction, each of the first edge, the second edge, and the third edge are is provided with the connection part, the groove provided for the connection part penetrates through the connection part in a third direction, the third direction is different from the first direction, and the third direction is different from the second direction.

By disposing the connection parts on the three edges of the mirror body, the curved mirror is positioned in the three directions, and rotation of the curved mirror around the three directions is also limited. This helps further improve position stability of the curved mirror relative to the housing.

According to the first aspect, in a possible implementation, the housing is provided with a positioning slot, the curved mirror includes a mirror body and a positioning protrusion protruding from an edge of the mirror body, and the positioning protrusion is accommodated in the positioning slot. The positioning slot positions the positioning protrusion, to further improve assembly accuracy between the curved mirror and the housing.

According to the first aspect, in a possible implementation, the optical display further includes a connection component. The connection component includes a pressing sheet and a first fastening member. The curved mirror is located between the pressing sheet and the housing. The first fastening member penetrates through the pressing sheet and the positioning post, and the pressing sheet presses the curved mirror onto the housing.

The curved mirror is pressed onto the housing by using the pressing sheet, that is, a position of the curved mirror is limited between the housing and the pressing sheet. This improves position stability of the curved mirror on the housing, reduces a possibility that the curved mirror is damaged due to a large local force, and prolongs a service life of the curved mirror, thereby helping improve use reliability of the optical display.

According to the first aspect, in a possible implementation, the housing further includes a connection post protruding from the first positioning surface. The connection component further includes a second fastening member, and the second fastening member is fixedly connected to the connection post.

Both the first fastening member and the second fastening member penetrate through the pressing sheet and are fixedly connected to the housing, to press and fasten the curved mirror to the housing. This improves connection strength and connection stability between the curved mirror and the housing.

According to the first aspect, in a possible implementation, the connection component further includes a flexible buffer, and the flexible buffer is located between the pressing sheet and the connection part.

The flexible buffer is located between the pressing sheet and the connection part, so that the flexible buffer can reduce a possibility that the connection part is damaged due to pressing of the pressing sheet. In addition, the flexible buffer can absorb vibration, thereby improving quality of imaging light output by the optical display.

According to the first aspect, in a possible implementation, the housing is provided with an assembly opening that communicates with an inner cavity of the housing. The curved mirror is disposed in the assembly opening. The optical display further includes a cover, and the cover is fixedly connected to the housing and covers the assembly opening.

The assembly opening is provided to facilitate mounting of the curved mirror into the housing or removal of the curved mirror from the housing, that is, to facilitate assembly and disassembly of the curved mirror and the housing. Disposing of the cover helps seal the assembly opening and reduce dust entering the housing.

According to the first aspect, in a possible implementation, the housing is provided with a mounting opening that communicates with an inner cavity of the housing. The optical display further includes a transmissive-reflective optical element. The transmissive-reflective optical element is fastened to the housing and covers the mounting opening. The transmissive-reflective optical element is configured to reflect imaging light output by the light source unit to the curved mirror. The transmissive-reflective optical element changes a transmission path of the imaging light emitted by the light source unit, thereby facilitating flexible disposing of an optical path in the housing based on a requirement, and improving layout flexibility of the optical display.

According to a second aspect, a seat is provided, including the optical display described above, where the optical display is installed on the seat.

According to a third aspect, a transport means is provided, including the optical display described above, where the optical display is installed on the transport means.

According to the third aspect, in a possible application scenario, the optical display may be integrated into a head-up display, and the head-up display may project navigation information, instrument information, and the like into a front field of view of a driver. In this way, the driver does not need to switch sight between an image and a road surface when looking down to view the information. This reduces crisis response time and improves driving safety.

In a possible application scenario, the optical display may be integrated into an in-vehicle display, and the in-vehicle display may be installed at a rear of a seat, a front-passenger seat, or the like. The user may watch a video or the like by using the optical display, so that an entertainment function of the transport means is improved.

In a possible application scenario, the optical display may be integrated into a vehicle light.

### BRIEF DESCRIPTION OF DRAWINGS

FIG. 1 is a diagram of an application scenario of a transport means according to an implementation of this application;
FIG. 2a is a sectional view of an optical display according to an implementation of this application;
FIG. 2b is a three-dimensional exploded view of the optical display shown in FIG. 2a;
FIG. 3 is a diagram of a virtual image forming principle of an optical display according to an implementation of this application;
FIG. 4 is a three-dimensional diagram of a housing of an optical display according to an implementation of this application;
FIG. 5 is a sectional view of a housing of an optical display according to an implementation of this application;
FIG. 6 is a locally enlarged diagram of an area A in FIG. 2a;
FIG. 7 is a locally enlarged diagram of an area B in FIG. 2a;
FIG. 8a is a diagram of a housing of an optical display according to an implementation of this application;
FIG. 8b is a three-dimensional diagram of a housing of an optical display according to an implementation of this application from another angle of view;
FIG. 9 is a planar diagram of assembling a housing and a light source unit together according to an implementation of this application;
FIG. 10a is a diagram of distribution of a fastening post and a positioning post on an installation surface according to an implementation of this application;
FIG. 10b is a three-dimensional diagram of a housing according to an implementation of this application from still another angle of view;
FIG. 11 is a three-dimensional exploded view of a housing and a curved mirror according to an implementation of this application;
FIG. 12 is a planar diagram of a curved mirror according to an implementation of this application;
FIG. 13 is a diagram of assembling a housing and a curved mirror together according to an implementation of this application;
FIG. 14 is a locally enlarged diagram of an area C in FIG. 13;
FIG. 15a is a planar diagram of a possible structure of a curved mirror according to an implementation of this application;
FIG. 15b is a planar diagram of a possible structure of a curved mirror according to an implementation of this application;
FIG. 15c is a planar diagram of a possible structure of a curved mirror according to an implementation of this application;
FIG. 15d is a planar diagram of a possible structure of a curved mirror according to an implementation of this application;
FIG. 16 is a diagram of three-dimensional assembly of a housing and a curved mirror according to an implementation of this application from another angle of view;
FIG. 17 is another sectional view of an optical display according to an implementation of this application;
FIG. 18a is a diagram of a partial structure of a transport means according to an implementation of this application;
FIG. 18b is a diagram of a possible implementation of integrating an optical display into a head-up display;
FIG. 19 is a diagram of a function of a transport means according to this application;
FIG. 20 is a diagram of a possible application scenario of an optical display according to an implementation of this application; and
FIG. 21 is a diagram of another possible application scenario of an optical display according to an implementation of this application.

### DESCRIPTION OF EMBODIMENTS

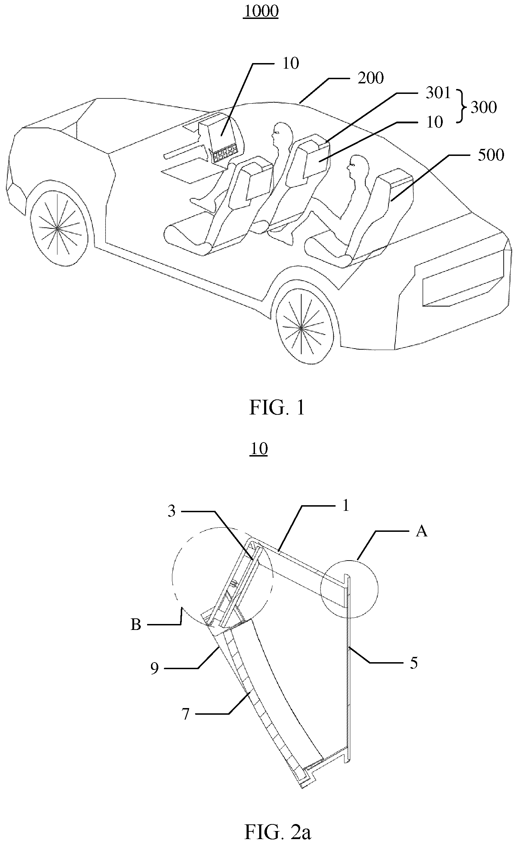

Refer to FIG. 1. An implementation of this application provides a transport means 1000. The transport means 1000 in the implementation of this application may be a known transport means like a vehicle, an aircraft, a boat, or a rocket, or may be a transport means newly emerging in the future. The vehicle may be an electric vehicle, a fuel vehicle, or a hybrid power vehicle, for example, a pure electric vehicle, an extended-range electric vehicle, a hybrid electric vehicle, a fuel cell vehicle, or a new energy vehicle. This is not specifically limited in this application.

The transport means 1000 includes a cockpit 200 and seats installed in the cockpit 200. The seats include a first seat 300 and a second seat 500, and are used for passengers to take. In this implementation, the first seat 300 is a front seat disposed in the cockpit 200. The second seat 500 is a rear seat arranged behind the first seat 300, and is used for a passenger to take. In another implementation of this application, the first seat 300 may not be a front seat.

The first seat 300 includes a seat body 301 and an optical display 10 installed on the seat body 301. In this application, a passenger who watches the optical display 10 on the second seat 500 is referred to as a viewer. It may be understood that the optical display 10 may alternatively be installed at a front-passenger seat (as shown in FIG. 1) of the transport means 1000, that is, installed on an instrument panel (Instrument Panel, IP) console of the transport means.

Refer to FIG. 2a. An implementation of this application provides an optical display 10, configured to output imaging light that carries image information.

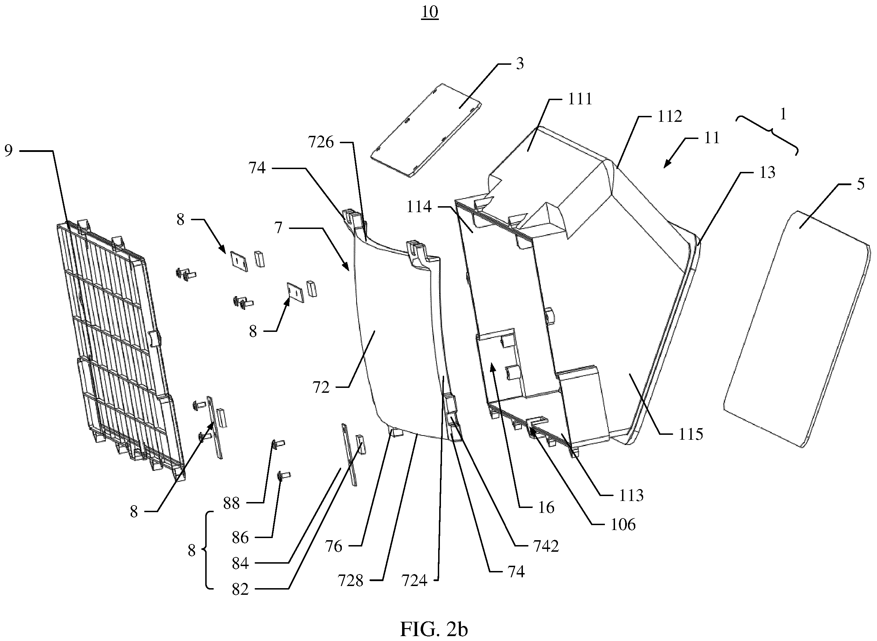

Refer to FIG. 2a and FIG. 2b. The optical display 10 includes a housing 1, a light source unit 3, a transmissive-reflective optical element 5, a curved mirror 7, a connection component 8, and a cover 9.

The light source unit 3 is fastened to the housing 1 and is configured to emit imaging light. The transmissive-reflective optical element 5 is fastened to the housing 1, and is configured to: transmit and reflect the imaging light. The curved mirror 7 is fastened to the housing 1 by using the connection component 8, and is configured to reflect the imaging light. The cover 9 is fastened to the housing 1, covers the curved mirror 7, and is configured to: protect the curved mirror 7 and reduce dust entering the housing 1.

The imaging light emitted by the light source unit 3 is reflected to the curved mirror 7 through the transmissive-reflective optical element 5, and imaging light reflected by the curved mirror 7 is transmitted to the outside of the housing 1 through the transmissive-reflective optical element 5. The light source unit 3 may be referred to as an image source. The transmissive-reflective optical element 5 may reflect the imaging light emitted by the light source unit 3 to the curved mirror 7, and transmit the imaging light reflected by the curved mirror 7.

In a conventional optical display, optical elements such as a light source and a curved mirror are first fastened to respective fastening frame bodies and then assembled to the housing. In this case, there are a large quantity of elements in the optical display. Since there is an assembly tolerance between elements, a larger quantity of elements may lead to more system/device assembly difficulty and lower assembly accuracy.

However, in this application, because each of the light source unit 3, the transmissive-reflective optical element 5, and the curved mirror 7 is directly fastened to a same housing 1 without using another adapter (for example, a respective fastening frame body), a quantity of elements of the optical display 10 is reduced, assembly difficulty of the optical display 10 is reduced, assembly accuracy of the optical display 10 is improved, and a structure of the optical display 10 is simplified. This further helps improve accuracy of an optical path system of the optical display 10, and improve output quality of imaging light of the optical display 10.

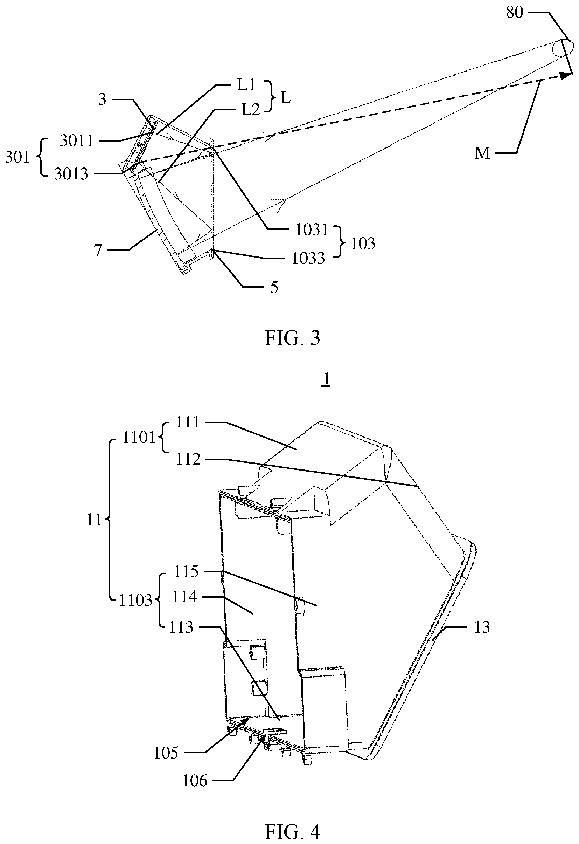

Refer to FIG. 3. In some implementations of this application, the curved mirror 7 may transmit imaging light to the outside of the housing 1 through the transmissive-reflective optical element 5, and then the imaging light enters an eye 80, so that the eye 80 sees an enlarged virtual image. The virtual image can be viewed by the eye without being received by a light screen. As shown in FIG. 3, the light source unit 3 emits imaging light L with a specific divergence angle. The imaging light L enters the eye 80 after being reflected by the transmissive-reflective optical element 5 and the curved mirror 7. In this case, a brain traces the light backward based on experience of "rectilinear propagation of light", and considers a point at which the imaging light L extended backward intersects as an object point, namely, a virtual image point. A position of the eye 80 may be referred to as an eyebox (Eyebox) position.

In another implementation of this application, the curved mirror 7 may project the imaging light to a light screen (not shown in the figure) located outside the housing 1 after the imaging light passes through the transmissive-reflective optical element 5. The light screen may be a wall, a projection screen, a wooden board, or the like. A specific form of the light screen is not limited in this application.

In some implementations of this application, the housing 1 is an integrally formed housing. In another implementation of this application, the housing 1 may be formed by assembling two or more parts.

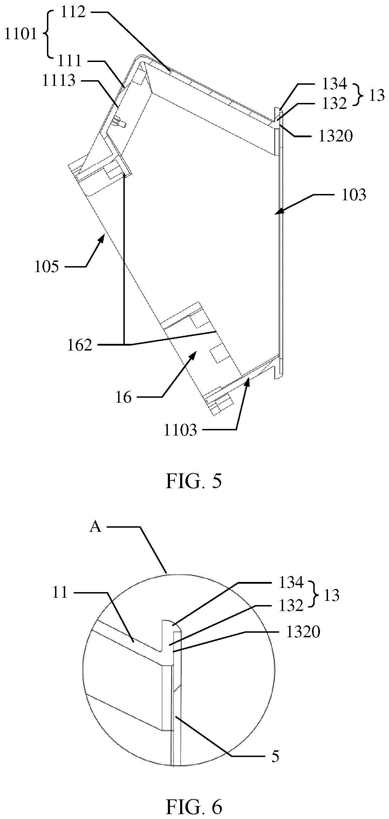

Refer to FIG. 4 and FIG. 5. The housing 1 includes a main housing 11 and a mounting part 13.

The main housing 11 includes a first part 1101 (which may be considered as an upper part of the housing 1) and a second part 1103 (which may be considered as a lower part of the housing 1) that are connected. A cavity enclosed by the first part 1101 and the second part 1103 includes a mounting opening 103 (as shown in FIG. 5) and an assembly opening 105 (both of which may be referred to as two openings, front and rear). The mounting opening 103 communicates with an inner cavity of the main housing 11, and the assembly opening 105 communicates with the inner cavity of the main housing 11. The mounting opening 103 is configured to pass through the imaging light. The assembly opening 105 is configured to assemble the curved mirror 7. The light source unit 3 is fixedly accommodated in the first part 1101. The transmissive-reflective optical element 5 and the curved mirror 7 are located on the second part 1103.

Because the light source unit 3 is installed and accommodated in the first part 1101, and the transmissive-reflective optical element 5 and the curved mirror 7 are located on the second part 1103, it is difficult for a user to see, by using the transmissive-reflective optical element 5, the light source unit 3 located in the first part 1101 when watching the optical display 10. That is, the light source unit 3 is hidden in the first part 1101. Stray light of the light source unit 3 does not directly reach a human eye through the transmissive-reflective optical element 5, so that user experience is improved, and imaging quality of the optical display 10 is also improved.

In some implementations of this application, the first part 1101 includes a first side wall 111 and a second side wall 112 that are in a bent connection. An installation surface 1113 disposed facing the inner cavity of the main housing 11 is disposed on the first side wall 111, and is configured to connect to the light source unit 3 (install the light source unit 3).

In some implementations of this application, the second part 1103 includes a third side wall 113, a fourth side wall 114, and a fifth side wall 115. The third side wall 113 is fixedly connected between the fourth side wall 114 and the fifth side wall 115.

A positioning groove 106 is formed on an inner wall that is of the third side wall 113 and that faces the inner cavity of the main housing 11, and is configured to position the curved mirror 7.

The fourth side wall 114 and the fifth side wall 115 are arranged oppositely. The first side wall 111 is located between the fourth side wall 114 and the fifth side wall 115. The second side wall 112 is located between the fourth side wall 114 and the fifth side wall 115. The third side wall 113 is located between the fourth side wall 114 and the fifth side wall 115. The first side wall 111, the second side wall 112, the third side wall 113, the fourth side wall 114, and the fifth side wall 115 jointly form the inner cavity of the main housing 11. The second side wall 112, the third side wall 113, the fourth side wall 114, and the fifth side wall 115 jointly form the mounting opening 103. The first side wall 111, the third side wall 113, the fourth side wall 114, and the fifth side wall 115 jointly form the assembly opening 105.

Refer to FIG. 6. The mounting part 13 protrudes from an outer side surface of the main housing 11, and is configured to fasten the transmissive-reflective optical element 5. An internal optical path of the optical display 10 is located inside the main housing 11, and the mounting part 13 for fastening the transmissive-reflective optical element 5 is disposed outside the main housing 11, so that the mounting part 13 does not affect the internal optical path of the optical display 10. In other words, the mounting part 13 does not affect transmission of imaging light inside the main housing 11, thereby reducing generation of reflected stray light of the optical display 10 and improving output quality of the imaging light of the optical display 10.

The mounting part 13 includes a mounting bottom wall 132 and a protective flange 134. The mounting bottom wall 132 protrudes from an outer side of the main housing 11, and a mounting surface 1320 is disposed on the mounting bottom wall 132, and is configured to be fixedly connected to the transmissive-reflective optical element 5. In this implementation, the mounting bottom wall 132 protrudes from the second side wall 112, the third side wall 113, the fourth side wall 114, and the fifth side wall 115, and the mounting bottom wall 132 is disposed along a peripheral contour of the mounting opening 103. The mounting surface 1320 is disposed obliquely relative to the installation surface 1113 (as shown in FIG. 5).

The transmissive-reflective optical element 5 is fixedly connected to the mounting surface 1320 of the mounting bottom wall 132. The transmissive-reflective optical element 5 is disposed in parallel with the mounting surface 1320. The mounting surface 1320 is disposed in parallel with the transmissive-reflective optical element 5, and a position of the mounting surface 1320 corresponds to a position of the transmissive-reflective optical element 5 in an optical path of the optical display 10. In a process of assembling the transmissive-reflective optical element 5 and the housing 1, the mounting surface 1320 may position the transmissive-reflective optical element 5 in a normal direction of the mounting surface 1320, so that positioning accuracy of the transmissive-reflective optical element 5 by using the housing 1 is improved, and output quality of the imaging light in the optical display 10 is improved.

In some implementations of this application, the transmissive-reflective optical element 5 is bonded to the mounting bottom wall 132 by using an adhesive. The adhesive may be a double-sided adhesive, or a gluing manner may be adopted.

In another implementation of this application, the transmissive-reflective optical element 5 and the mounting surface 1320 may alternatively be disposed in a non-parallel manner.

In another implementation of this application, the mounting surface 1320 is disposed on an inner wall of the housing 1, and the transmissive-reflective optical element 5 may alternatively be located inside the housing 1.

The protective flange 134 protrudes from the mounting bottom wall 132, and is disposed along a peripheral edge of the mounting bottom wall 132, to protect an edge of the transmissive-reflective optical element 5. In some implementations of this application, the protective flange 134 is disposed around the transmissive-reflective optical element 5, to enclose the transmissive-reflective optical element 5. In another implementation of this application, the protective flange 134 protrudes from a part of the peripheral edge of the mounting bottom wall 132, to protect the edge of the transmissive-reflective optical element 5 in segments or areas, that is, the protective flange 134 protects at least a part of the edge of the transmissive-reflective optical element 5.

The protective flange 134 encloses at least a part of the edge of the transmissive-reflective optical element 5 to protect the transmissive-reflective optical element 5, reduce a possibility that the transmissive-reflective optical element 5 is scratched and damaged, and further prolong a service life of the transmissive-reflective optical element 5. In addition, the protective flange 134 encloses at least a part of the edge of the transmissive-reflective optical element 5, so that a possibility that the user is scratched or cut by the edge of the transmissive-reflective optical element 5 can be reduced, and security and reliability of the optical display 10 can be improved.

In another implementation of this application, the mounting part 13 may be omitted, and the transmissive-reflective optical element 5 is directly fastened to the main housing 11, or the transmissive-reflective optical element 5 may alternatively be accommodated inside the main housing 11.

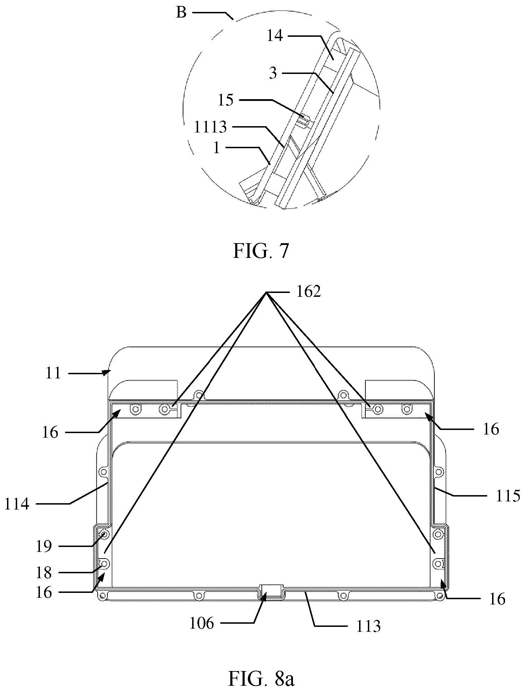

Refer to FIG. 7. The housing 1 further includes a fastening post 14 and a light source positioning post 15 that protrude from the installation surface 1113. The fastening post 14 is fixedly connected to the light source unit 3.

The light source unit 3 may be disposed in parallel with the installation surface 1113. A position of the installation surface 1113 corresponds to a position of the light source unit 3 in an optical path of the optical display 10. In a process of assembling the light source unit 3 and the housing 1, the installation surface 1113 may position the light source unit 3 in a normal direction of the installation surface 1113, so that positioning accuracy of the light source unit 3 by using the housing 1 is improved, and output quality of the imaging light of the optical display 10 is improved. In another implementation of this application, the light source unit 3 and the installation surface 1113 may alternatively be disposed in a non-parallel manner.

The light source positioning post 15 is configured to position the light source unit 3.

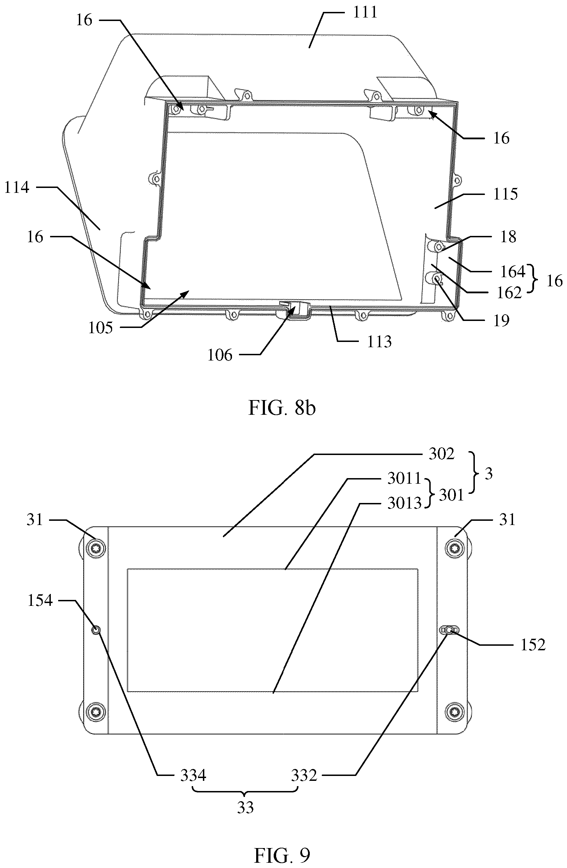

Refer to FIG. 8a and FIG. 8b. The housing 1 further includes a positioning part 16 that is disposed on an inner wall of the main housing 11 for positioning the curved mirror 7.

In some implementations of this application, there are a plurality of positioning parts 16, and the plurality of positioning parts 16 are disposed on the inner wall of the main housing 11. Each of the first side wall 111, the fourth side wall 114, and the fifth side wall 115 is provided with the positioning part 16 facing an inner wall of an inner cavity of the main housing 11. The positioning part 16 is approximately in a groove-shaped structure. For example, as shown in FIG. 8b, the positioning part 16 on the first side wall 111 is a groove-shaped structure that is disposed on the first side wall 111 and that is located in the main housing 11, and the positioning part 16 on the fifth side wall 115 is a groove-shaped structure that is recessed in the fifth side wall 115 and that is located in the main housing 11. Each positioning part 16 includes a first positioning surface 162 and a side surface 164. The first positioning surface 162 is disposed facing the assembly opening 105, and is configured to attach to the curved mirror 7, to improve assembly accuracy between the curved mirror 7 and the housing 1.

A structure of the positioning part 16 is not limited in this application, provided that the positioning part 16 can position the curved mirror 7. For example, several protruding posts may protrude from the inner wall of the main housing 11. The several protruding posts enclose one positioning part 16, and the positioning part 16 can limit a position of the curved mirror 7 on the housing 1.

In some implementations of this application, a normal direction of the first positioning surface 162 is the same as a normal direction of the assembly opening 105, and first positioning surfaces 162 of the plurality of positioning parts 16 may be located on a same plane. In another implementation of this application, the first positioning surfaces 162 of the plurality of positioning parts 16 may be parallel to each other or may not be parallel to each other. In another implementation of this application, the normal direction of the first positioning surface 162 may be different from the normal direction of the assembly opening 105.

The housing 1 further includes a positioning post 18 that protrudes from the first positioning surface 162, and that is configured to position the curved mirror 7.

The housing 1 further includes a connection post 19 that protrudes from the first positioning surface 162, and that is configured to be fixedly connected to the curved mirror 7.

In another implementation of this application, the housing 1 may not be an integrally formed housing.

In another implementation of this application, a structure of the housing 1 is not limited. For example, the mounting opening 103 and the assembly opening 105 are located on the second part 1103, and the housing 1 can fasten the light source unit 3, the transmissive-reflective optical element 5, and the curved mirror 7, so that the optical display 10 can output imaging light.

In another implementation of this application, the assembly opening 105 may be omitted, and the curved mirror 7 is fixedly accommodated in the housing 1.

According to the optical display 10 provided in this application, because the light source unit 3, the transmissive-reflective optical element 5, and the curved mirror 7 are integrated on the housing 1 as a whole, relative positions of the light source unit 3, the transmissive-reflective optical element 5, and the curved mirror 7 are determined based on an optical principle. This ensures display effect of the optical display 10.

In some implementations of this application, the light source unit 3 uses a liquid crystal display (liquid crystal display, LCD) imaging technology. LCD imaging uses a principle of photoelectric effect of liquid crystals. An arrangement state of liquid crystal molecules changes due to impact of an external electric field. Liquid crystal molecules in different arrangement states can control a light transmittance. For example, there are liquid crystal molecules between two polarizers whose polarization directions are perpendicular to each other. When no electric field is applied, the liquid crystal molecules can rotate a polarization direction of linearly polarized light passing through a first polarizer by 90°. In this case, the light passes through a second polarizer at a maximum transmittance. When an electric field is applied, an arrangement state of the liquid crystal molecules changes, a rotation angle of polarized light also changes, and intensity of the light passing through the second polarizer decreases. Each pixel of an LCD includes three primary colors. A color picture is displayed by controlling strength of the three primary colors. A type of a light source of the light source unit 3 is not limited in this application. For example, the light source unit 3 may further use a digital light processing (digital light processing, DLP) technology, laser scanning projection, or the like.

In some implementations of this application, refer to FIG. 9. The light source unit 3 includes a light-emitting area 301 and a non-light emitting area 302. The light-emitting area 301 is configured to emit imaging light. The non-light emitting area 302 may be a frame of the light source unit 3. In some implementations of this application, the non-light emitting area 302 is fixedly connected to the fastening post 14.

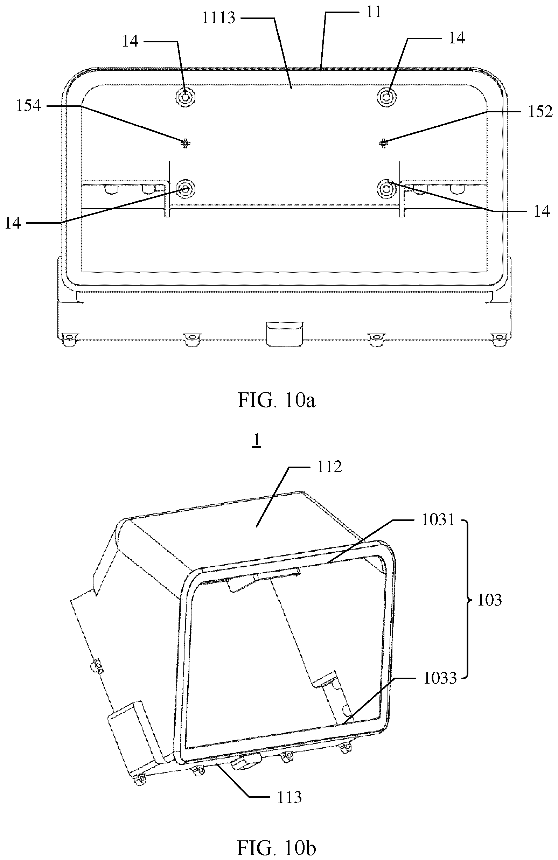

The non-light emitting area 302 is disposed around the light-emitting area 301, and is provided with a fastening hole 31. A quantity of fastening holes 31 corresponds to a quantity of fastening posts 14. There are four fastening holes 31, and the four fastening holes 31 are distributed at four corners of the light source unit 3. Refer to FIG. 10a. There are four fastening posts 14. The fastening post 14 is a stud, and is provided with a threaded hole fitting a screw. After penetrating through the fastening hole 31, the screw is fastened in and penetrates through the threaded hole of the fastening post 14, so that the light source unit 3 is fastened to the fastening post 14. A shape of the light source unit 3 is not limited in this application. For example, the light source unit 3 may be in a circular shape or an irregular shape, and the light source unit 3 may emit imaging light. In another implementation of this application, the fastening post 14 may be fastened in and penetrate through the fastening hole 31.

A positioning hole 33 is provided on the non-light emitting area 302, and is configured to dispose the light source positioning post 15 in a penetrating manner, so as to position the light source unit 3 on the housing 1.

In some implementations of this application, the positioning hole 33 includes a first positioning hole 332 and a second positioning hole 334. The light source positioning post 15 includes a first light source positioning post 152 and a second light source positioning post 154. The first light source positioning post 152 penetrates through the first positioning hole 332, and the second light source positioning post 154 penetrates through the second positioning hole 334. In an arrangement direction of the first positioning hole 332 and the second positioning hole 334, a length of the first positioning hole 332 is greater than a length of the second positioning hole 334. For example, the second positioning hole 334 is a circular hole, and the first positioning hole 332 is a long-strip-shaped hole whose length in the first direction is greater than a diameter of the second positioning hole 334.

In an ideal state, a shape of the positioning hole 33 adapts to a shape of the light source positioning post 15, and a preset spacing (a designed spacing) between two positioning holes 33 is the same as a preset spacing between two light source positioning posts 15. For example, the positioning hole 33 is circular, and the light source positioning post 15 is cylindrical. However, in practice, a manufacturing error inevitably exists, so that an error exists between an actual spacing between two light source positioning posts 15 and the preset spacing. In this case, the light source positioning post 15 of the light source unit 3 may fail to be installed into the corresponding positioning hole 33.

In this application, in the arrangement direction of the first positioning hole 332 and the second positioning hole 334, the length of the first positioning hole 332 is greater than the length of the second positioning hole 334, and an assembly margin is reserved when the light source unit 3 is assembled on the housing 1 through the first positioning hole 332. In other words, when a difference exists between an actual spacing between the first light source positioning post 152 and the second light source positioning post 154 and the preset spacing, the light source unit 3 may also be assembled on the housing 1. For example, when the actual spacing between the first light source positioning post 152 and the second light source positioning post 154 is greater than the preset spacing, the first light source positioning post 152 can still be installed into the first positioning hole 332, and the second light source positioning post 154 can still be installed into the second positioning hole 334. In this way, requirements on manufacturing accuracy of the housing 1 and the optical display 10 and manufacturing costs are reduced.

In another implementation of this application, the fastening post 14, the first light source positioning post 152, and the second light source positioning post 154 may be all omitted. The light source unit 3 may be directly fastened to the installation surface 1113 of the first side wall 111. How to fasten the light source unit 3 and the housing 1 is not limited in this application. For example, the light source unit 3 may omit the non-light emitting area 302, the light-emitting area 301 of the light source unit 3 is pasted on the first side wall 111 by using an adhesive, and the light source unit 3 covers the first side wall 111.

In another implementation of this application, the light source unit 3 may alternatively be fastened outside the housing 1, that is, the installation surface 1113 may be disposed on an outer side surface of the housing 1. For example, a light transmission area may be disposed on a side wall of the housing 1, and imaging light emitted by the light source unit 3 enters an inner cavity of the housing 1 through the light transmission area. The light transmission area may be a through hole, or may be a transparent area.

Refer to FIG. 9 and FIG. 3. The light-emitting area 301 includes a first light-emitting area edge 3011 and a second light-emitting area edge 3013 that are arranged oppositely. In some implementations of this application, the first light-emitting area edge 3011 is disposed at an end that is of the light-emitting area 301 and that is close to the mounting opening 103. The second light-emitting area edge 3013 is disposed at an end that is of the light-emitting area 301 and that is away from the mounting opening 103. Imaging light L includes imaging light L1 and imaging light L2. The two channels of imaging light limit a divergence angle of light emitted by the light source unit 3. The imaging light L1 is emitted from the first light-emitting area edge 3011, and the imaging light L2 is emitted from the second light-emitting area edge 3013.

The light-emitting area 301 of the light source unit 3 has a light-emitting surface, and the transmissive-reflective optical element 5 has a reflective surface. The light-emitting surface of the light source unit 3 is disposed obliquely relative to the reflective surface of the transmissive-reflective optical element 5, and no other optical element is required. Imaging light emitted from the light-emitting surface may be directly incident to the transmissive-reflective optical element 5, so that an internal optical path of the optical display 10 and a structure of the optical display 10 are simplified.

Refer to FIG. 3 and FIG. 10b. The mounting opening 103 includes a first mounting edge 1031 and a second mounting edge 1033 that are arranged oppositely. The first mounting edge 1031 is located at an edge of an end that is of the second side wall 112 and that is away from the assembly opening 105. The second mounting edge 1033 is located at an edge of an end that is of the third side wall 113 and that is away from the assembly opening 105. A first point on the first mounting edge 1031 and a second point on the edge 3013 of the second light-emitting area are located on a connection line M. The first light-emitting area edge 3011 is located on a first side of the connection line M, and the second mounting edge 1033 is located on a second side of the connection line M. When a user uses the optical display 10, the eye 80 is located on a first side on which the first mounting edge 1031 is located, and the eye 80 is located above the connection line M, so that the eye 80 does not directly see the light-emitting area 301 (namely, a bright spot) of the light source unit 3 during normal viewing. This prevents stray light of the light source unit 3 from being directly transmitted to human eyes through the transmissive-reflective optical element 5 (in a normal case, the stray light is first reflected by the transmissive-reflective optical element 5 to the curved mirror 7, then is reflected by the curved mirror 7, and then is incident to the human eyes through the transmissive-reflective optical element 5), so that display effect of the optical display 10 is improved and user experience is also improved.

It can be learned from FIG. 3 that the first mounting edge 1031 included in the mounting opening 103 may be referred to as an upper edge of the mounting opening 103, and the second mounting edge 1033 may be referred to as a lower edge of the mounting opening 103. Correspondingly, the first light-emitting area edge 3011 of the light-emitting area 301 may be referred to as an upper edge of the light-emitting area 301, and the second light-emitting area edge 3013 may be referred to as a lower edge of the light-emitting area 301.

The transmissive-reflective optical element 5 is an optical element that can transmit a part of incident light that is incident to the transmissive-reflective optical element 5 and reflect a part of the incident light. For example, the transmissive-reflective optical element can transmit 50% of incident light, and the transmissive-reflective optical element can reflect 50% of the incident light. Alternatively, the transmissive-reflective optical element can transmit 30% of incident light, and the transmissive-reflective optical element can reflect 70% of the incident light. A proportion of the incident light transmitted by the transmissive-reflective optical element 5 to the total incident light may be selected based on a requirement. The transmissive-reflective optical element 5 may be made of glass, or the like.

In this implementation, the curved mirror 7 is a reflector that matches a free-form surface required for optical imaging.

A surface of an optical element used in conventional optical design is a standard spherical surface. Usually, a plurality of spherical mirrors need to cooperate to correct an aberration. Consequently, an optical structure of the optical element is complex, and large space is occupied.

As the optical industry develops, design and manufacturing technologies of complex aspheric surfaces are greatly improved. Aspheric surfaces are usually quadratic surfaces such as a parabolic surface, an ellipsoidal surface, an involute surface, and a hyperbolic surface with a rotating axis, high-order surfaces, and non-rotating aspheric surfaces such as an off-axis aspheric surface. In different use scenarios, one aspheric surface may usually replace two or more spherical surfaces to correct an aberration, to simplify the optical structure and implement miniaturization and lightweight of an optical path.

Compared with the aspheric surface, a free-form surface is a more complex optical structure. A curvature radius of each point on the surface is different, and a degree of freedom of the surface is very high. The free-form surface can not only replace a plurality of aspheric surfaces to correct an aberration, but also maximally improve optical quality and simplify the optical structure. An optical free-form surface has a complex structure, a high degree of freedom, and no clear expression definition. Generally, an optical surface that does not have global rotational symmetry, does not have a unified optical axis, and has a plurality of curvature radii on the entire surface is considered as an optical free-form surface.

In another implementation of this application, the curved mirror 7 may alternatively be a spherical reflector or an aspheric reflector. This is not limited in this application.

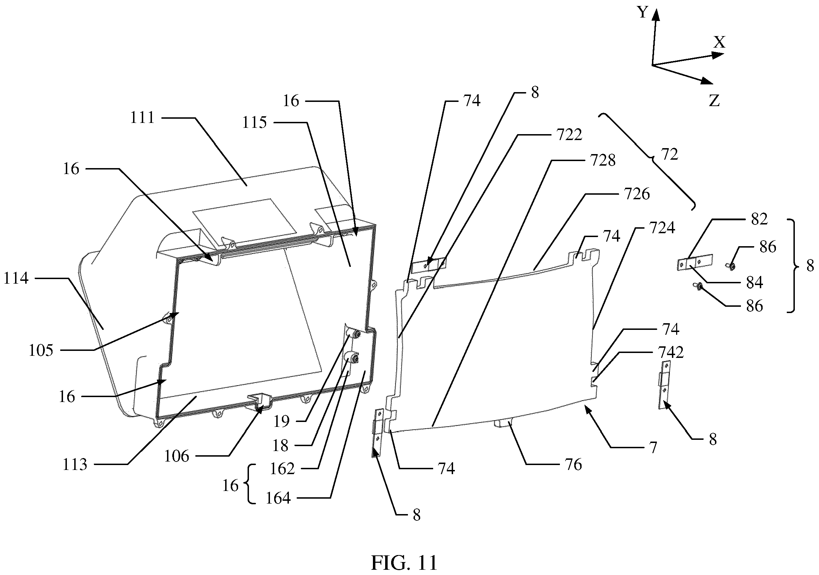

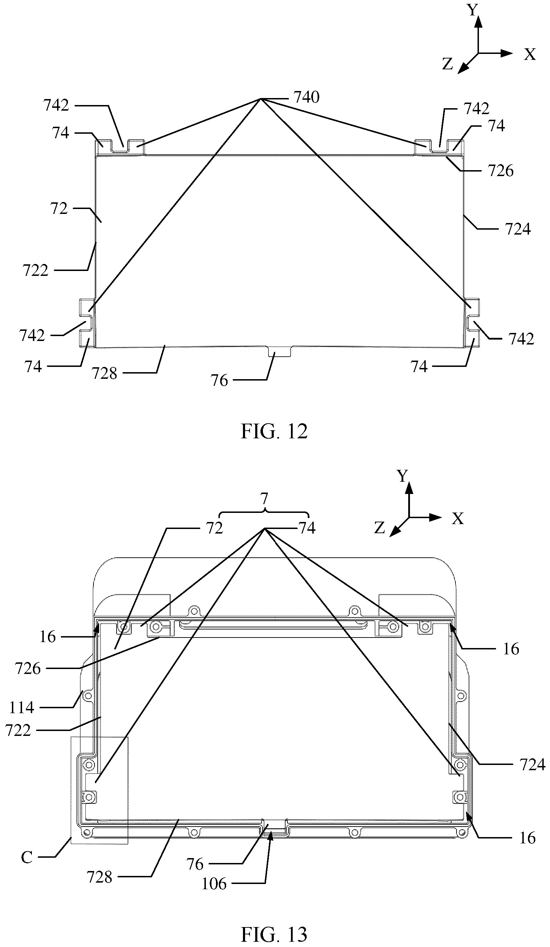

Refer to FIG. 11 and FIG. 12. The curved mirror 7 includes a mirror body 72, a connection part 74, and a positioning protrusion 76. The connection part 74 protrudes from the mirror body 72, and the connection part 74 is accommodated in the positioning part 16, and is configured to be combined and fixedly connected with the positioning part 16. The positioning protrusion 76 protrudes from the mirror body 72, and the positioning protrusion 76 is accommodated in the positioning groove 106.

The mirror body 72 includes a first edge 722, a second edge 724, a third edge 726, and a fourth edge 728. The first edge 722 and the second edge 724 are arranged oppositely in a first direction (for example, an X direction shown in FIG. 11 and FIG. 12). The third edge 726 and the fourth edge 728 are arranged oppositely in a second direction (for example, a Y direction shown in FIG. 11 and FIG. 12), and the first direction is different from the second direction. A normal direction of the first positioning surface 162 is a third direction (a Z direction shown in FIG. 11 and FIG. 12), the third direction is different from the first direction, and the third direction is different from the second direction. In this implementation, the first direction is perpendicular to the second direction, the first direction is perpendicular to the third direction, and the second direction is perpendicular to the third direction. The first edge 722 is disposed on a side on which the mirror body 72 is adjacent to the fourth side wall 114. The second edge 724 is disposed on a side on which the mirror body 72 is adjacent to the fifth side wall 115. The third edge 726 is disposed on a side on which the mirror body 72 is adjacent to the first side wall 111. The fourth edge 728 is disposed on a side on which the mirror body 72 is adjacent to the third side wall 113. In some implementations of this application, in the second direction, in a direction from the fourth edge 728 of the curved mirror 7 to the third edge 726, a position of the light-emitting area 301 of the light source unit 3 is higher than a position of the curved mirror 7 and a position of the transmissive-reflective optical element 5 (as shown in FIG. 1 and FIG. 3).

In some implementations of this application, there are a plurality of connection parts 74. Each connection part 74 is correspondingly accommodated in one positioning part 16, and is fixedly connected to the first positioning surface 162 in the positioning part 16.

Connection parts 74 protrude from the first edge 722, the second edge 724, and the third edge 726. Each connection part 74 is correspondingly accommodated in one positioning part 16. Each connection part 74 is fixedly connected to the first positioning surface 162 in the positioning part 16 by using the connection component 8. In this implementation, one connection part 74 protrudes from each of the first edge 722 and the second edge 724, and two connection parts 74 protrude from the third edge 726. The four connection parts 74 are approximately located at four corners of the mirror body 72.

The connection part 74 on the first edge 722, the connection part 74 on the second edge 724, and the connection part 74 on the third edge 726 cooperate with the corresponding positioning parts 16, so that the curved mirror 7 can be positioned on the main housing 11.

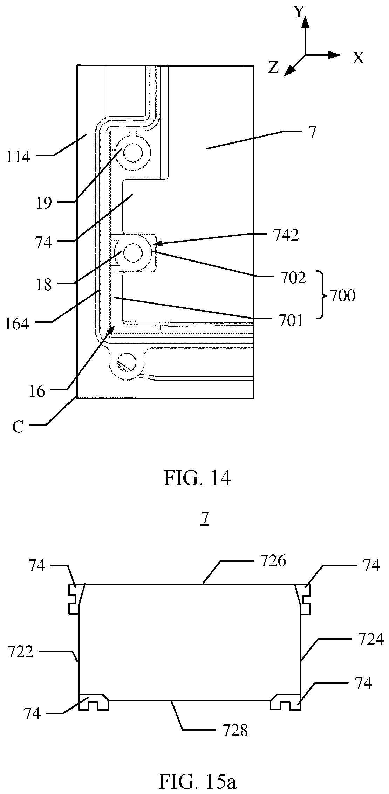

Each connection part 74 is further provided with a groove 742 that penetrates through the connection part 74 in the third direction, and the groove is configured to dispose the positioning post 18 in a penetrating manner. Refer to FIG. 13 and FIG. 14. Each positioning post 18 on the housing 1 penetrates through the groove 742 of one connection part 74, and is configured to position the connection part 74. This facilitates assembly between the curved mirror 7 and the housing 1, and improves assembly accuracy and assembly efficiency of the optical display 10.

A second positioning surface 740 (as shown in FIG. 12) that presses against or is attached to the first positioning surface 162 is disposed on a side that is of each connection part 74 and that faces the first positioning surface 162. A reflection layer (for example, a reflection coating) is disposed on the curved mirror 7 to form a reflection surface for reflecting imaging light. The reflection surface may be located on a side that is of the curved mirror 7 and that faces the assembly opening 105, or the reflection surface may be located on a side that is of the curved mirror 7 and that is away from the assembly opening 105, namely, a side that faces the mounting opening 103. The second positioning surface 740 may be provided with a reflection layer, or may not be provided with a reflection layer. The first positioning surface 162 and the second positioning surface 740 are parallel to and press against each other, to implement positioning of the curved mirror 7 in the third direction and limit the curved mirror 7 to rotate around the first direction and the second direction. In some implementations of this application, second positioning surfaces 740 of the plurality of connection parts 74 are located on a same plane. In another implementation of this application, the first positioning surface 162 and the second positioning surface 740 may be disposed in a non-parallel manner, and the second positioning surfaces 740 of the plurality of connection parts 74 may be disposed in parallel or in a non-parallel manner.

Through cooperation between the connection part 74 disposed on the edge of the mirror body 72 and the corresponding positioning part 16, the curved mirror 7 is positioned in three directions, and rotation of the curved mirror 7 around the three directions is also limited. This helps further improve position stability of the curved mirror 7 relative to the housing 1, and further improves display quality of the optical display 10.

Due to a difference in manufacturing materials, a thermal expansion coefficient of the curved mirror and a thermal expansion coefficient of another fitting component (for example, a housing) of the optical display are usually different. Therefore, when an ambient temperature changes greatly, the curved mirror is easily deformed due to squeezing of the another fitting component. The curved mirror and the housing are used as an example. When the ambient temperature of the optical display is greater than a preset temperature (for example, 70 degrees Celsius), the curved mirror and the housing are deformed due to thermal expansion, and the housing may squeeze the curved mirror. Once the curved mirror is deformed, an optical path of imaging light reflected by a deformed part is distorted, and consequently, output quality of the imaging light of the optical display is affected.

In some implementations of this application, a thermal expansion coefficient of the curved mirror 7 is different from a thermal expansion coefficient of the housing 1. Due to a thermal expansion factor of the housing 1 and the curved mirror 7, a reserved gap 700 (as shown in FIG. 14) exists between edges (including the first edge 722, the second edge 724, the third edge 726, the fourth edge 728, and the edges of the connection parts 74) of the curved mirror 7, to reserve thermal expansion space for the curved mirror 7 and the housing 1. This reduces a possibility that the curved mirror 7 is deformed due to squeezing, and improves optical path stability of the optical display 10.

The reserved gap 700 includes a first reserved gap 701 and a second reserved gap 702. The first reserved gap 701 is provided between the side surface 164 and an edge of the connection part 74, to reserve thermal expansion space for the connection part 74 and the housing 1.

The second reserved gap 702 is provided between an inner wall of the groove 742 of each connection part 74 and the corresponding positioning post 18, to reserve thermal expansion space between the positioning post 18 and the connection part 74. In some implementations of this application, a length of the mirror body 72 in the first direction is greater than a length of the mirror body 72 in the second direction, and a thermal expansion degree of the curved mirror 7 in the first direction may be greater than a thermal expansion degree of the curved mirror 7 in the second direction. The positioning part 16 on the fourth side wall 114 and the corresponding connection part 74 are used as an example. In the first direction, the second reserved gap 702 exists between a part of the inner wall of the groove 742 and the corresponding positioning post 18. In the second direction, a part of the inner wall of the groove 742 is closely attached to the corresponding positioning post 18, to reduce a possibility of deformation of the curved mirror 7 caused by thermal expansion and improve positioning accuracy of the positioning part 16 on the connection part 74. In another implementation of this application, the length of the mirror body 72 in the first direction is greater than or equal to the length of the mirror body 72 in the second direction.

With reference to FIG. 12, the positioning protrusion 76 protrudes from the fourth edge 728 of the mirror body 72, and the positioning protrusion 76 is accommodated in the positioning groove 106 and is fastened to an inner wall of the positioning groove 106 for positioning the curved mirror 7 in the first direction. This can improve assembly efficiency and assembly accuracy when the curved mirror 7 is assembled on the housing 1. A shape of the positioning protrusion 76 may be a square, a cone, or the like. A shape of the positioning protrusion 76 is not limited in this application. In another implementation of this application, the positioning protrusion 76 may be accommodated in the positioning groove 106.

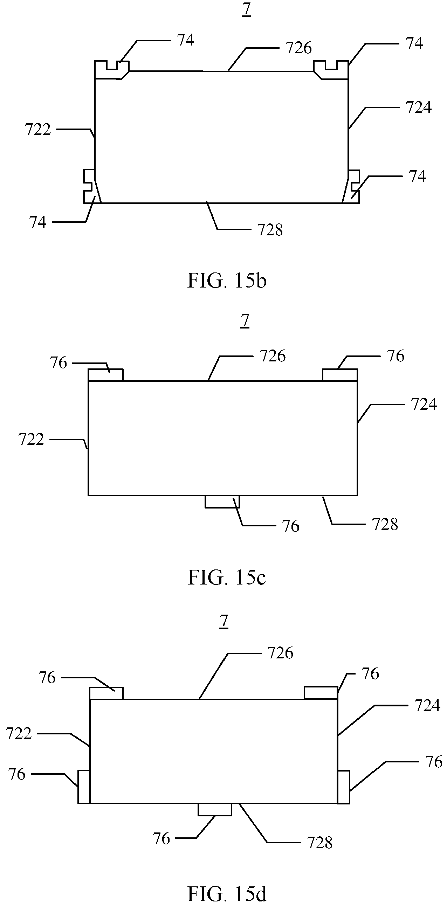

A quantity and positions of connection parts 74 on the curved mirror 7 are not limited in this application, and a quantity and positions of positioning protrusions 76 on the edge of the mirror body 72 are not limited in this application. For example, as shown in FIG. 15a, in a possible implementation, the connection part 74 on the third edge 726 may be omitted, the connection part 74 on the first edge 722 is disposed close to the third edge 726, the connection part 74 on the second edge 724 is disposed close to the third edge 726, and two connection parts 74 may protrude from the fourth edge 728. As shown in FIG. 15b, in a possible implementation, the positioning protrusion 76 on the fourth edge 728 may be omitted, and no connection part 74 is disposed on the fourth edge 728. As shown in FIG. 15c, in a possible implementation, the connection part 74 on the first edge 722 may be omitted, and the connection part 74 on the second edge 724 may be omitted. The positioning protrusion 76 is disposed on each of the third edge 726 and the fourth edge 728. The curved mirror 7 is fastened to the housing by fastening the positioning protrusion 76 to the positioning groove 106. As shown in FIG. 15d, in a possible implementation, the positioning protrusion 76 is disposed on each of the first edge 722, the second edge 724, the third edge 726, and the fourth edge 728.

In another implementation of this application, the positioning post 18, the positioning part 16, and the connection post 19 may be omitted, and the connection part 74 is directly fastened to the housing 1 by using an adhesive or in another manner.

A shape of the mirror body 72 is not limited in this application, a quantity of edges of the mirror body 72 is not limited, and a quantity of connection parts 74 is not limited. For example, in another implementation of this application, the mirror body 72 may be circular, there may be one edge of the mirror body 72, there may be one connection part 74, and the connection part 74 protrudes from the mirror body 72.

In this application, the positioning protrusion 76 is not limited to being disposed on the fourth edge 728, and the positioning protrusion 76 is disposed on an edge of the mirror body 72. In another implementation of this application, the positioning groove 106 and the positioning protrusion 76 may be omitted.

In another implementation of this application, the curved mirror 7 may not be accommodated in the inner cavity of the main housing 11, the curved mirror 7 fixedly covers the assembly opening 105, the positioning part 16 may be disposed on an outer side of the housing 1, the first positioning surface 162 may be located on an outer side of the housing 1, and the positioning groove 106 may also be provided on an outer side of the housing 1.

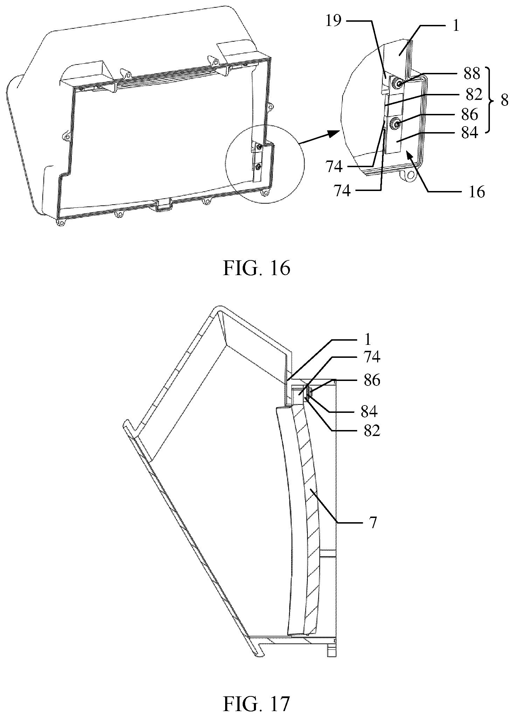

Refer to FIG. 2b, FIG. 11, FIG. 16, and FIG. 17. There are a plurality of connection components 8. Each connection component 8 includes a flexible buffer 82, a pressing sheet 84, a first fastening member 86, and a second fastening member 88. The flexible buffer 82 is fastened between the connection part 74 and the pressing sheet 84, and the connection part 74, the flexible buffer 82, and the pressing sheet 84 are sequentially stacked. The first fastening member 86 penetrates through the pressing sheet 84 and the groove 742 (as shown in FIG. 14) of the connection part 74 and is fixedly connected to one positioning post 18. The second fastening member 88 penetrates through the pressing sheet 84 and is fixedly connected to one connection post 19. Both the first fastening member 86 and the second fastening member 88 apply a force to the pressing sheet 84, and the pressing sheet 84 presses the connection part 74 on the first positioning surface 162, to implement a fixed connection between the housing 1 and the curved mirror 7. The flexible buffer 82 may alternatively be located between the first fastening member 86 and the second fastening member 88. In another implementation of this application, the first fastening member 86 and the second fastening member 88 may penetrate through the flexible buffer 82, and a length of the flexible buffer 82 and a length of the pressing sheet 84 may be less than or equal to a length of the pressing sheet 84.

The flexible buffer 82 has an elastic deformation capability. The flexible buffer 82 can reduce a possibility that the connection part 74 is damaged because the pressing sheet 84 is pressed tightly. In addition, the flexible buffer 82 can absorb vibration, improve an anti-seismic capability of the optical display 10, and further improve quality of the imaging light output by the optical display 10. The flexible buffer 82 may be made of a rubber strip, foam, silicon rubber, or another elastomer material. In some implementations of this application, hardness of the pressing sheet 84 is greater than hardness of the flexible buffer 82. The pressing sheet 84 may be selected but is not limited to one of a sheet metal part, a die casting part, or a plastic part.

The curved mirror 7 is pressed onto the housing 1 by using the pressing sheet 84, and a position of the curved mirror 7 is limited between the housing 1 and the pressing sheet 84. This improves position stability of the curved mirror 7 on the housing 1, reduces a possibility that the curved mirror 7 is damaged due to a large local force, and prolongs a service life of the curved mirror 7, thereby helping improve use reliability of the optical display 10.

In some implementations of this application, the first fastening member 86 and the second fastening member 88 are screws. Both the positioning post 18 and the connection post 19 are provided with threaded holes. The first fastening member 86 is in a threaded connection to the positioning post 18, and the second fastening member 88 is in a threaded connection to the connection post 19. The connection post 19 may be, but is not limited to, one of a self-tapping stud, a hot-melt nut, or an in-mold decorative nut. Both the first fastening member 86 and the second fastening member 88 penetrate through the pressing sheet 84 and are fixedly connected to the housing 1, to press and fasten the curved mirror 7 to the housing 1. This improves connection strength and connection stability between the curved mirror 7 and the housing 1.

In some implementations of this application, the connection part 74 and the positioning protrusion 76 may be omitted, and the curved mirror 7 is directly fastened to the housing 1 by using the connection component 8.

In some implementations of this application, the positioning part 16, the first positioning surface 162, the positioning post 18, and the connection post 19 may be omitted from the housing 1. The second fastening member 88 and the pressing sheet 84 may be omitted from the connection component 8, and the flexible buffer 82 and the curved mirror 7 are directly fastened to the housing 1 by using the first fastening member 86. For example, the first fastening member 86 may be fixedly connected to the housing 1 through the flexible buffer 82.

In some other implementations of this application, the transport means may be a truck, a motorcycle, a bus, a boat, a helicopter, a lawn mower, a recreational vehicle, a playground vehicle, construction equipment, a tram, a golf cart, a train, a trolley, or the like. This is not specifically limited in this application.

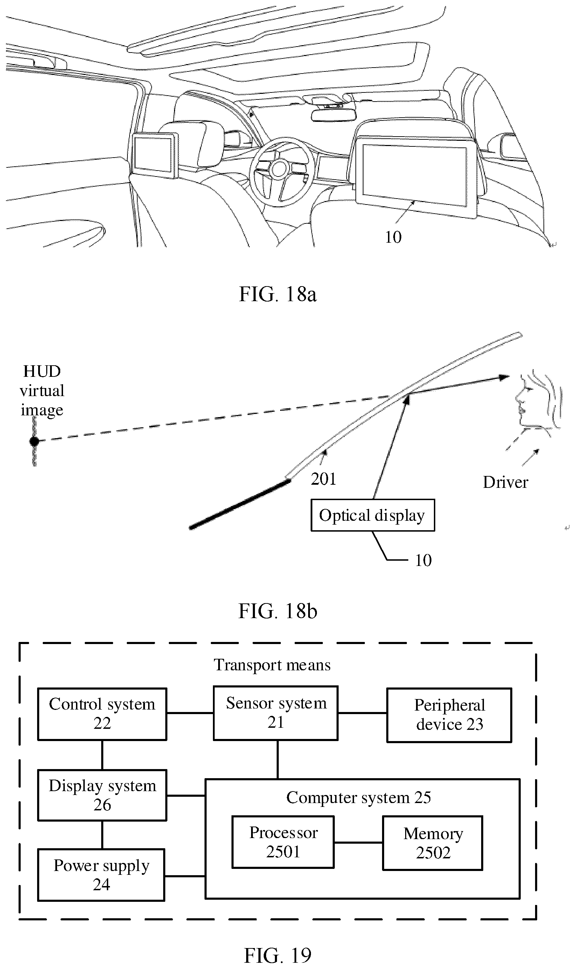

As shown in FIG. 18a, in a possible implementation, the optical display 10 in this application is integrated into an in-vehicle display. The in-vehicle display may be installed on the back of a seat of the transport means 1000, or the in-vehicle display may be installed at another position like a front-passenger seat. A position at which the in-vehicle display is installed is not limited in this application.

As shown in FIG. 18b, the optical display 10 is integrated into a head-up display (Head-up display, HUD) in FIG. 18b. The HUD can project navigation information, instrument information, and the like to a front field of view angle of a driver to prevent the driver from looking down to view the information, which affects driving safety. The transport means further include a reflective part 201, configured to project imaging light emitted by the HUD to the outside of the transport means. The reflective part 201 may be windshield. After the imaging light emitted by the HUD is reflected by the reflective part 201, a virtual image is formed outside the transport means. A type of the HUD includes but is not limited to a windshield (Windshield, W)-HUD, an augmented reality head-up display (AR-HUD), and the like. In FIG. 18a, the optical display 10 partially protrudes from the back of the seat. The optical display may alternatively be completely embedded into the back of the seat, that is, the optical display does not protrude from the back of the seat.

In still another possible implementation, the optical display 10 in this application may alternatively be integrated into a vehicle light. In addition to a lighting function, the vehicle light can also implement an adaptive driving beam (Adaptive Driving Beam, ADB), which can project complex images such as a text or a traffic sign, and project a picture like a video to add a driving assistance or entertainment function.

FIG. 19 is a functional diagram of a transport means according to an embodiment of this application.

The transport means may include various subsystems such as a sensor system 21, a control system 22, one or more peripheral devices 23 (one peripheral device is used as an example in the figure), a power supply 24, a computer system 25, and a display system 26. The foregoing subsystems may communicate with each other. The display system 26 may include the display apparatus provided in embodiments of this application. The transport means may further include another functional system, for example, an engine system or a cockpit that provides power for the transport means. This is not limited herein in this application.

The sensor system 21 may include several detection apparatuses. The detection apparatuses can sense measured information, and convert the sensed information into an electrical signal or other information in a required form based on a specific rule for output. As shown in FIG. 19, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 22 may include several elements, for example, a steering unit, a brake unit, a lighting system, an autonomous driving system, a map navigation system, a network time system, and an obstacle avoidance system shown in the figure. The control system 22 may receive information (such as a vehicle speed and a vehicle distance) sent by the sensor system 21, to implement functions such as autonomous driving and map navigation.

Optionally, the control system 22 may further include elements such as a throttle controller and an engine controller that are configured to control a driving speed of a vehicle, and the like, and this is not limited in this application.

The peripheral device 23 may include several elements such as a communication system, a touchscreen, a user interface, a microphone, and a speaker. The communication system is configured to implement network communication between the transport means and another device other than the transport means. In actual application, the communication system may use a wireless communication technology or a wired communication technology to implement network communication between the transport means and the another device. The wired communication technology may mean that a vehicle communicates with the another device through a network cable, an optical fiber, or the like.

The power supply 24 represents a system for providing power or energy for the vehicle, and may include but is not limited to a rechargeable lithium battery and lead-acid battery. In actual application, one or more battery modules in the power supply are configured to provide electrical energy or energy for starting the vehicle. A type and a material of the power supply are not limited in this application.

Several functions of the transport means may be controlled and implemented by the computer system 25. The computer system 25 may include one or more processors 2501 (one processor is shown as an example in the figure) and a memory 2502 (that may also be referred to as a storage apparatus). In actual application, the memory 2502 is inside the computer system 25, or may be outside the computer system 25, for example, may be used as a cache in the transport means. This is not limited in this application.

The processor 2501 may include one or more general-purpose processors such as a graphics processing unit (graphics processing unit, GPU). The processor 2501 may be configured to run a related program stored in the memory 2502 or instructions corresponding to a program, to implement a corresponding function of the vehicle.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2502 may alternatively include a combination of the foregoing types of memories. The memory 2502 may be configured to store a set of program code or instructions corresponding to program code, so that the processor 2501 invokes the program code or the instructions stored in the memory 2502 to implement a corresponding function of the vehicle. In this application, the memory 2502 may store a set of program code for controlling the vehicle. The processor 2501 may control safe driving of the vehicle by invoking the program code. How to implement safe driving of the vehicle is specifically described in detail below in this application.

Optionally, in addition to storing the program code or the instructions, the memory 2502 may further store information such as a road map, a driving route, sensor data, and the like. The computer system 25 may implement a vehicle-related function in combination with other elements in the diagram of the functional framework of the vehicle, for example, a sensor and a GPS in the sensor system. For example, the computer system 25 may control a driving direction, a driving speed, or the like of the transport means based on data input of the sensor system 21, and this is not limited in this application.

The display system 26 may interact with another system in the transport means. For example, the display system 26 may display navigation information sent by the control system 22, or play a video sent by the computer system 25 and the peripheral device 23. For a specific structure of the display system 26, refer to the foregoing embodiment of the display apparatus. Details are not described herein again.

The four subsystems shown in this embodiment, namely, the sensor system 21, the control system 22, the computer system 25, and the display system 26, are merely examples, and do not constitute a limitation. In actual application, the transport means may combine several elements in the vehicle based on different functions, to obtain subsystems with corresponding different functions. In actual application, the transport means may include more or fewer systems or elements. This is not limited in this application.

The transport means in embodiments of this application may be a known transport means like a vehicle, an aircraft, a boat or a rocket, or may be a transport means newly emerging in the future. The vehicle may be an electric vehicle, a fuel vehicle, or a hybrid power vehicle, for example, a pure electric vehicle, an extended-range electric vehicle, a hybrid electric vehicle, a fuel cell vehicle, or a new energy vehicle. This is not specifically limited in this application.

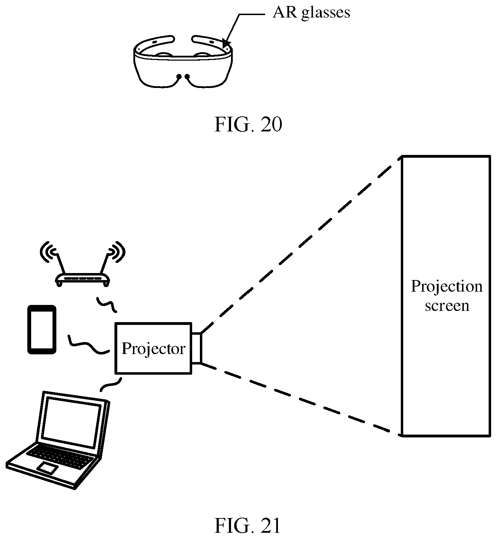

The optical display 10 is not limited to being used for the transport means 1000 in this application, and the optical display 10 may also be used for another device. In a possible application scenario, the optical display in this application is integrated into a near eye display (Near Eye Display, NED) device, and a NED device, for example, may be an AR device or a VR device. The AR device may include but is not limited to AR glasses or an AR helmet, and the VR device may include but is not limited to VR glasses or a VR helmet. Refer to FIG. 20. AR glasses are used as an example. A user may wear an AR glasses device to play a game, watch a video, participate in a virtual conference, perform video shopping, or the like.

In another possible application scenario, the optical display 10 in this application is integrated into a projector. Refer to FIG. 21. The projector may project an image onto a wall or a projection screen.

The foregoing application scenario is merely an example. The optical display provided in this application may be further applied to another possible scenario, for example, a medical device. This is not limited in this application.

Orientation terms mentioned in this application, for example, "on", "below", "front", "back", "left", "right", "inside", "outside", and "side wall", are merely directions based on the accompanying drawings. Therefore, the orientation terms are used to better and more clearly describe and understand this application, instead of indicating or implying that a specified apparatus or element needs to have a specific orientation, and be constructed and operated in the specific orientation. Therefore, this cannot be understood as a limitation on this application.

In addition, in this specification, the sequence numbers, such as "first" and "second", of components are merely intended to distinguish between the described objects, and do not have any sequential or technical meaning. Unless otherwise specified, the "connection" in this application includes a direct connection and an indirect connection.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical display, comprising:
a housing that is provided with a first positioning surface;
a light source unit that is fastened to the housing and is configured to emit imaging light; and
a curved mirror, comprising a mirror body and a connection part protruding from the mirror body, wherein the mirror body is configured to reflect the imaging light to the outside of the housing, and the connection part is fixedly connected to the first positioning surface.

2. The optical display according to claim 1, wherein
the connection part is provided with a groove, the housing further comprises a positioning post protruding from the first positioning surface, and the positioning post penetrates through the groove.

3. The optical display according to claim 2, wherein
a reserved gap exists between an inner wall of the groove and the positioning post.

4. The optical display according to claim 2, wherein
the housing further comprises a positioning part disposed on the housing, the first positioning surface is disposed on an inner wall of the positioning part, and the connection part is accommodated in the positioning part.

5. The optical display according to claim 4, wherein
the inner wall of the positioning part further comprises a side surface connected to the first positioning surface, and a reserved gap exists between the side surface and an edge of the connection part.

6. The optical display according to claim 2, wherein
there are a plurality of connection parts, the mirror body comprises a first edge, a second edge, a third edge, and a fourth edge, the first edge and the second edge are arranged oppositely in a first direction, the third edge and the fourth edge are arranged oppositely in a second direction, the first direction is different from the second direction, each of the first edge, the second edge, and the third edge is provided with the connection part, the groove provided for the connection part penetrates through the connection part in a third direction, the third direction is different from the first direction, and the third direction is different from the second direction.

7. The optical display according to claim 2, wherein
the optical display further comprises a connection component, the connection component comprises a pressing sheet and a first fastening member, the curved mirror is located between the pressing sheet and the housing, the first fastening member penetrates through the pressing sheet and the positioning post, and the pressing sheet presses the curved mirror onto the housing.

8. The optical display according to claim 7, wherein
the housing further comprises a connection post protruding from the first positioning surface, the connection component further comprises a second fastening member, and the second fastening member is fixedly connected to the connection post.

9. The optical display according to claim 7, wherein
the connection component further comprises a flexible buffer, and the flexible buffer is located between the pressing sheet and the connection part.

10. The optical display according to claim 1, wherein
the housing is provided with a positioning slot, the curved mirror comprises a mirror body and a positioning protrusion protruding from an edge of the mirror body, and the positioning protrusion is accommodated in the positioning slot.

11. The optical display according to any one of claims 1 to 10, wherein
the housing is provided with an assembly opening that communicates with an inner cavity of the housing, and the curved mirror is disposed in the assembly opening; and
the optical display further comprises a cover, and the cover is fixedly connected to the housing and covers the curved mirror.

12. A seat, comprising the optical display according to any one of claims 1 to 11, wherein the optical display is installed on the seat.

13. A transport means, comprising the optical display according to any one of claims 1 to 11, wherein the optical display is installed on the transport means.
